# EUROPEAN PATENT APPLICATION

(11) **EP 4 391 260 A1**
(43) Date of publication of application: **26.06.2024**
(21) Application number: 23218012.5
(22) Date of filing: 19.12.2023
(51) Int. Cl.: H02G 3/08, H02G 3/12

(54) **INSTALLATION BOX, ASSEMBLY COMPRISING AT LEAST TWO INSTALLATION BOXES AND A METHOD OF COUPLING TWO INSTALLATION BOXES**

(30) Priority: 20.12.2022 NL 2033759
(71) Applicant: Attema B.V., 4203 NJ Gorinchem (NL)
(72) Inventor: de HOOG, Antonie, 4203 NJ GORINCHEM (NL)
(74) Representative: EP&C

(57) **Abstract**

The present invention relates to an installation box for an electrical installation for mounting in a hole of a wall, the installation box having a longitudinal axis, and comprising a bottom wall, a side wall, at least one coupling system for coupling the installation box to a corresponding coupling system of another installation box, the at least one coupling system comprising a first coupling device located at the bottom wall, and a second coupling device located on the side wall at a distance away from the bottom wall, wherein the first coupling device defines a first rotational coupling axis and a second rotational coupling axis, wherein the coupling system is configured to be coupled to said corresponding coupling system by coupling the first coupling device of the installation box to the corresponding first coupling device of the corresponding coupling system of the other installation box via a first rotation about the first rotational coupling axis, and subsequently coupling the second coupling device of the installation box to the corresponding second coupling device of the corresponding coupling system of the other installation box via a second rotation about the second rotational coupling axis.

## Description

### FIELD OF THE INVENTION

The invention relates to the field of electrical installation material, and more specifically to installation boxes for an electrical installation for mounting in a hole of a wall. The wall may be a ceiling or a floor of a room. The invention further relates to an assembly comprising two or more installation boxes. The invention yet further relates to a method of coupling two installation boxes.

Herein, an installation box is deemed equivalent to an electrical installation box, a junction box, and an electrical junction box. The installation box may be used for housing installation material in general, (junctions between) electrical conductors, electrical signal wires, optical cables or fibers, and may further accommodate switching material, one or more electrical or optical sockets, signaling material, telecommunication material, building automation material, controller or computer material, and the like.

### BACKGROUND OF THE INVENTION

In installations of the kind described above, it may be desirable to use different electrical installation box sizes. When for example a single socket is to be installed a smaller installation box is required compared to installing a double socket. In order to give the installation person more flexibility, an installation box for a single socket may be coupled to another installation box for a single socket. This way, with two single installation boxes a double installation box can be obtained that is suitable for a double socket.

When coupling two or more installation boxes it is desired that relative movements between the coupled boxes are restricted. Drawbacks of current coupled installation boxes often include relative rotational movements and/or relative translational movements.

It may be desired to seal the coupling between two installation boxes, for example via the use of a thermoplastic elastomer provided on one or both of the installation boxes outer surface. When the sealing material has a high friction coefficient it tends to be difficult to couple two installation boxes via a relative sliding movement, for example a sliding movement along their respective longitudinal axes.

There further is a need for an installation box that can be coupled to another installation box, wherein the inner space of the installation box is less affected by a coupling system, and/or wherein less material is used.

### SUMMARY OF THE INVENTION

It would be desirable to at least partially remove the above drawbacks.

To better address one or more of these concerns, in a first aspect of the invention an installation box for an electrical installation is provided for mounting in a hole of a wall. The installation box has a longitudinal axis, and comprises:
∘ a bottom wall extending transverse to the longitudinal axis,
∘ a side wall extending substantially parallel to the longitudinal axis, the side wall having a first end that is attached to the bottom wall, and a free, second end,
∘ at least one coupling system for coupling the installation box to a corresponding coupling system of another installation box, the at least one coupling system comprising
   ▪ a first coupling device located at the bottom wall, the first coupling device being configured to be coupled to a corresponding first coupling device of the corresponding coupling system of the other installation box, and
   ▪ a second coupling device located on the side wall at a distance away from the bottom wall, the second coupling device being configured to be coupled to a corresponding second coupling device of the corresponding coupling system of the other installation box,
   wherein the first coupling device defines a first rotational coupling axis and a second rotational coupling axis, wherein the first rotational coupling axis extends substantially perpendicular to a side wall part that is adjacent the first coupling device along the longitudinal axis, and wherein the second rotational coupling axis extends tangent and parallel to the side wall part that is adjacent the first coupling device along the longitudinal axis, wherein the coupling system is configured to be coupled to said corresponding coupling system by coupling the first coupling device of the installation box to the corresponding first coupling device of the corresponding coupling system of the other installation box via a first rotation about the first rotational coupling axis, and subsequently coupling the second coupling device of the installation box to the corresponding second coupling device of the corresponding coupling system of the other installation box via a second rotation about the second rotational coupling axis.

An advantage of the installation box is that the coupling system can be coupled to a corresponding coupling system of another installation box, in particular to a substantially identical coupling system of another installation box.

The installation box does not require a sliding movement relative to another installation box in order to couple the two installation boxes. Coupling of two installation boxes is achieved via two rotational, or pivotal, movements between the two installation boxes. This way the side wall with the second coupling device of a first installation box is moved transversely, almost perpendicularly, to the side wall with the second coupling device of a second installation box. This has as an advantage that it becomes easier to couple two installation boxes to each other having a sealing material on the part of the side wall to be coupled. This is in particular beneficial for sealing material having a relatively high friction coefficient.

The sealing between two installation boxes may be improved as well. A sliding movement may cause the sealing material to move relative to the side wall it is provided on. This may degrade a seal between the installation boxes.

The coupling system has as an advantage that it restricts relative translational movements between two coupled installation boxes, in particular in multiple directions, more in particular in all directions.

The coupling system has as an advantage that it restricts relative rotational movements between two coupled installation boxes.

The coupling system allows for the provision of pre-tension when coupled to another coupling system. The pre-tension can be obtained via the first rotation between two corresponding first coupling devices. The pre-tension improves the coupling between two installation boxes by preventing the second coupling device from releasing.

The installation box is also configured to be decoupled from another installation box when coupled therewith.

In an embodiment of the installation box, the first coupling device comprises
∘ a first flap extending parallel to the bottom wall, the first flap having a first surface facing the free, second end of the side wall, and an opposite, second surface,
∘ a second flap extending parallel to the bottom wall, the second flap having a first surface facing the free, second end of the side wall, and an opposite, second surface,
wherein the second surface of the second flap is located at a distance from the second surface of the first flap along the longitudinal axis.

In an embodiment of the installation box, the first surface of the first flap is substantially flush with the second surface of the second flap.

In an embodiment of the installation box, in rear view a gap is provided between the first flap and the second flap, the gap being located at the first rotation axis, in particular on the first rotation axis.

In an embodiment of the installation box, the second coupling is provided on a substantially flat outer surface of the side wall. When the flat outer surface is coupled to corresponding flat surface of another installation box, a stable coupling arrangement may be obtained.

In an embodiment of the installation box, the installation box is substantially circular in rear view of the installation box, and wherein the first coupling device in rear view of the installation box does not extend beyond the outer contour of the installation box.

In an embodiment of the installation box, the installation box is circular in rear view of the installation box, and wherein the second coupling device in rear view of the installation box does not extend beyond the outer contour of the installation box.

Keeping the first coupling device and/or the second coupling device within a circular outer contour of the installation box has as an advantage that an installation person can provide the installation box in a corresponding circular drilled hole of substantially the same dimensions as the outer contour of the installation box.

In an embodiment of the installation box, the side wall part comprising the second coupling device is provided with sealing material, in particular around a hole in the side wall part or around a hole to be made in the side wall part, the hole being configured to provide passage for electrical installation components.

In an embodiment of the installation box, the second coupling device comprises
∘ a recess or through hole provided in the side wall, the recess or through hole comprising a hook receiving member,
∘ a hook member extending radially outwardly from the side wall, the hook member being configured to hook behind a hook receiving member of a corresponding second coupling device of the corresponding coupling system of the other installation box when coupled thereto.

In an embodiment of the installation box, the hook member extends over a hook distance away from the side wall, wherein the hook distance is at most equal to a wall thickness of the side wall.

An advantage of the second coupling device is that there is little to no loss of inner space of the installation box, as the second coupling device does not extend into the inner space of the installation box.

In an embodiment of the installation box, the second coupling device comprises a sealing wall that extends radially into the through hole, the sealing wall being configured to abut the hook member when the installation box is coupled to the other installation box for sealing a coupling between the second coupling device and the corresponding second coupling device.

In an embodiment of the installation box, the hook member comprises a first section extending from the side wall and having a free end, and a second section extending transversely from the free end of the first section in a direction opposite to the first rotation.

In an embodiment the installation box comprises a first coupling system and a second coupling system provided diametrically opposed relative to the first coupling system, when seen relative to the longitudinal axis in rear view of the installation box.

In an embodiment the installation box comprises a first and a second coupling system, and a third coupling system provided between the first coupling system and the second coupling system, when seen in rear view of the installation box.

Providing the installation box with multiple coupling systems allows for the coupling of multiple installation boxes. When for example providing four coupling systems on the installation box, it is possible to couple four other installation boxes to said installation box. A disadvantage of installation box is that the coupling system may be less suitable for a two-by-two, or squared configuration of four installation boxes.

In an embodiment of the installation box, a first flap thickness of the first flap is substantially equal to or less than half the thickness of the bottom wall, and wherein a second flap thickness of the second flap is substantially equal to or less than half the thickness of the bottom wall.

In an embodiment of the installation box, the first flap is provided with a recess or with a through hole in the first surface, and wherein the second flap comprises a protrusion provided on the second surface thereof, wherein the protrusion and recess or through hole are located on a line parallel to the second rotation axis and at an equal distance from the first rotation axis.

In an embodiment of the installation box, the protrusion has a protrusion height that is equal to or smaller than the first flap thickness.

In an embodiment of the installation box, the second surface of the first flap is substantially flush with a rear surface of the bottom wall.

In an embodiment of the installation box, the bottom wall, the side wall and the coupling system are integrally manufactured via injection moulding.

The integral configuration of the bottom wall, side wall and the coupling system has as an advantage that no other parts or materials are required for coupling two installation boxes.

The installation box further has as an advantage that few material is required for the coupling system, thereby providing a cost effective installation box.

In a second aspect of the invention, an assembly is provided comprising a first installation box according to the invention and a second installation box according to the invention, wherein a first coupling system of the first installation box is coupled to a first coupling system of the second installation box, wherein the first coupling device of the first installation box is coupled to a corresponding first coupling device of the second installation box, and wherein a second coupling device of the first installation box is coupled to a corresponding second coupling device of the second installation box.

In an embodiment of the assembly, the second coupling device comprises
∘ a recess or through hole provided in the side wall, the recess or through hole comprising a hook receiving member,
∘ a hook member extending radially outwardly from the side wall, the hook member being hooked behind a hook receiving member of a corresponding second coupling device of the corresponding coupling system of the other installation box when coupled thereto,
wherein the coupling between the first coupling devices provides a torsional force about the first rotational coupling axis for pushing the hook member of the first installation box against the hook receiving member of the second installation box.

In an embodiment the assembly comprises a third installation box, wherein a first coupling system of the third installation box is coupled to a second coupling system of the first installation box or to a second coupling system of the second installation box.

The assembly according to the second aspect of the invention has the same advantages as the installation box according to the first aspect of the invention.

In a third aspect of the invention, a method is provided of coupling a first installation box according to the invention to a second installation box according to the invention, the method comprising
a. providing a first installation box according to the first aspect of the invention and a second installation box according to the first aspect of the invention,
b. engaging the first coupling device of the first installation box with the first coupling device of the second installation box such that the first rotational coupling axis of the first installation box intersects the first rotational coupling axis of the second installation box,
c. rotating the first installation box and second installation box relative to each other about their respective first rotational axes until the second rotational axis of the first installation box substantially coincides with the second rotational axis of the second installation box,
d. pivoting the first installation box and second installation box relative to each other about their respective second rotational axes, thereby moving the side wall adjacent the first coupling device of the first installation box towards the side wall adjacent the first coupling device of the second installation box,
e. coupling the second coupling device of the first installation box to the second coupling device of the second installation box.

The method provides an easy way of coupling two or more installation boxes.

In an embodiment of the method, the second coupling device comprises
∘ a recess or through hole provided in the side wall, the recess or through hole comprising a hook receiving member,
∘ a hook member extending radially outwardly from the side wall, the hook member being configured to hook behind a hook receiving member of a corresponding second coupling device of the corresponding coupling system of the other installation box when coupled thereto
wherein step e comprises inserting the hook member of the second coupling device of the first installation box in the recess or through hole of the second coupling device of the second installation box, and inserting the hook member of the second coupling device of the second installation box in the recess or through hole of the second coupling device of the first installation box.

These and other aspects of the invention will be more readily appreciated as the same becomes better understood by reference to the following detailed description and considered in connection with the accompanying drawings in which like reference symbols designate like parts.

### BRIEF DESCRIPTION OF THE FIGURES

Figure 1 schematically shows a perspective view of an embodiment of an installation box according to a first aspect of the invention.
Figure 2 schematically shows another perspective view of the installation box of figure 1.
Figure 3 schematically shows a front view of the installation box of figure 1.
Figure 4 schematically shows a rear view of the installation box of figure 1.
Figure 5 schematically shows a side view of the installation box of figure 1.
Figure 6 schematically shows a perspective view of an assembly comprising two installation boxes according to the invention.
Figure 7 schematically shows a rear view of the assembly of figure 6.
Figure 8 schematically shows a front view of the assembly of figure 6.
Figure 9 schematically shows a side view of the assembly of figure 6.
Figure 10 schematically shows a cross-sectional front view of the assembly of figure 6, along the section A-A in figure 8.
Figure 11 schematically shows a close-up view of figure 10 as indicated by dashed circle B.
Figure 12 schematically shows a step of an embodiment of a method of coupling two installation boxes according to the invention.
Figure 13 schematically shows a different view of the step of the method as shown in figure 12.
Figure 14 schematically shows another step of the method of coupling two installation boxes according to the invention.
Figure 15 schematically shows a different view of the step of the method of coupling two installation boxes as shown in figure 14.

### DETAILED DESCRIPTION OF THE FIGURES

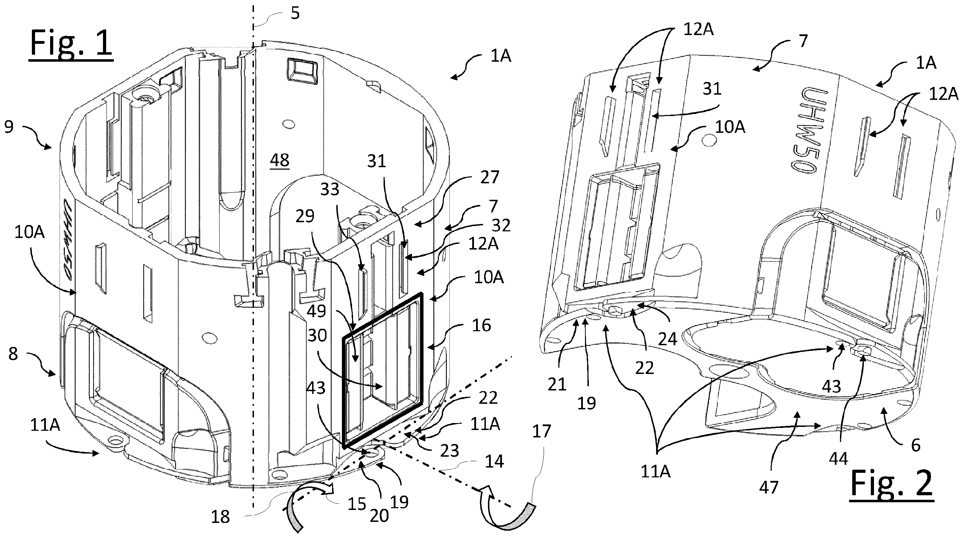

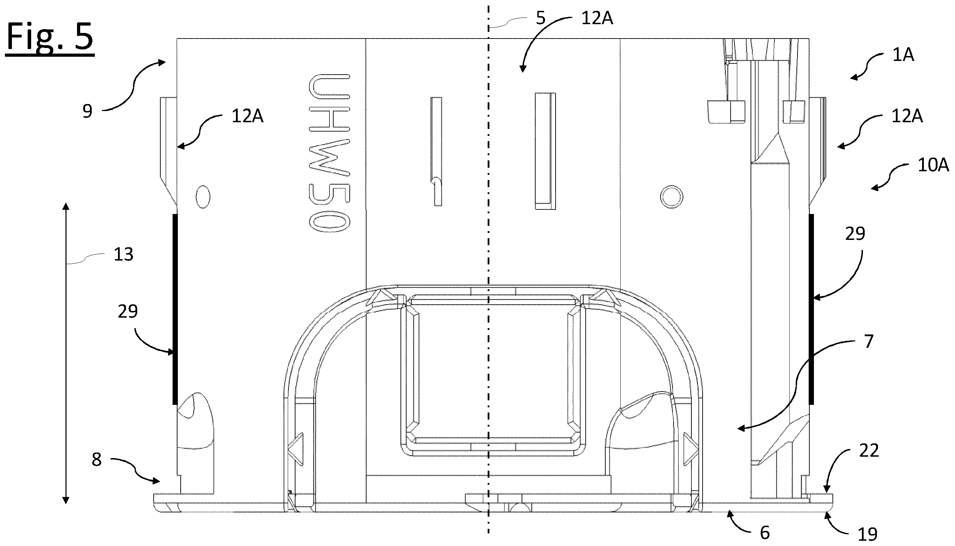

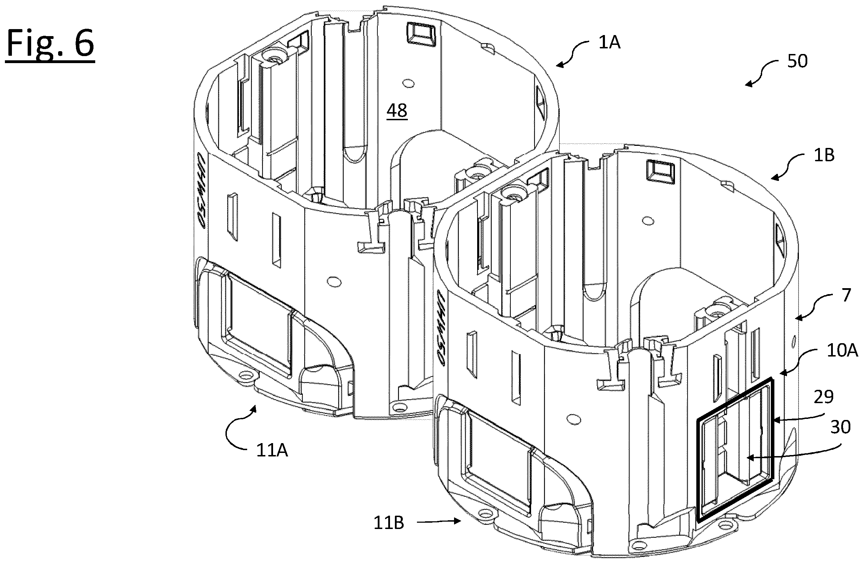

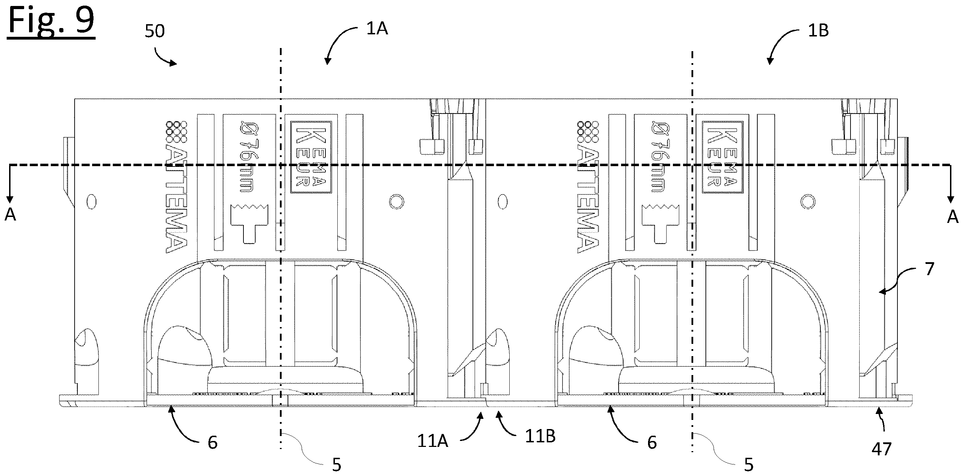

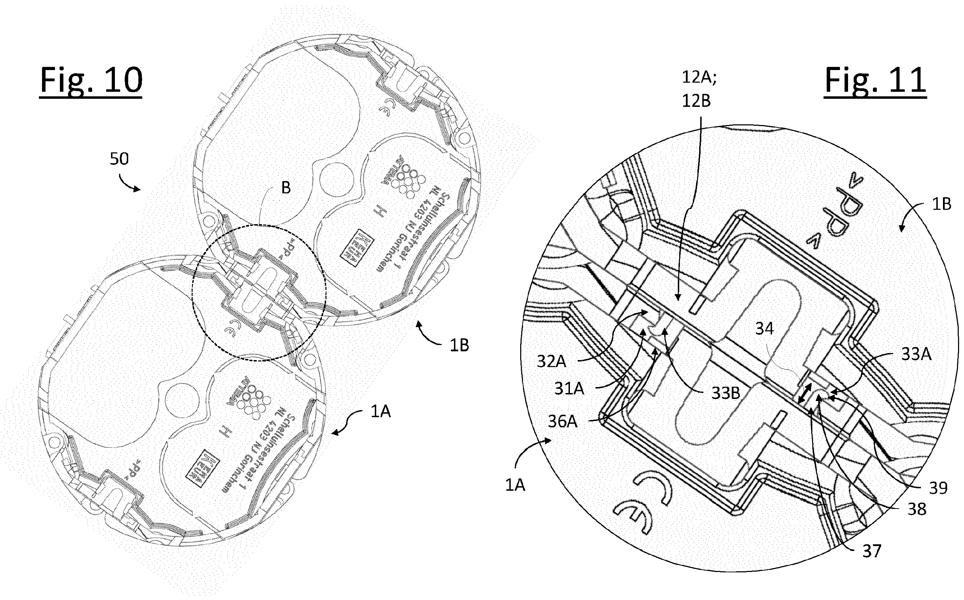

Figures 1 to 5 show different views of an embodiment of an installation box 1A for an electrical installation configured for mounting in a hole of wall. The installation box 1A is configured to be coupled to another installation box 1B, in particular to an identical installation box. Two coupled installation boxes 1A, 1B are shown in figures 6 to 11.

The installation box 1A has an (imaginary) longitudinal axis 5. The installation box 1A comprises a bottom wall 6 extending transverse to the longitudinal axis 5, and a side wall 7 extending substantially parallel to the longitudinal axis 5. The side wall 7 has a first end 8 that is attached to the bottom wall 6, and a free, second end 9.

The installation box 1A comprises at least one coupling system 10A for coupling the installation box 1A to a corresponding coupling system 10B of another installation box 1B. In the shown embodiment the installation box 1A comprises a first coupling system 10A.1, a second coupling system 10A.2, and a third coupling system 10A.3.

The first coupling system 10A.1, second coupling system 10A.2, and third coupling system 10A.3 are provided on a same plane that extends perpendicular to the longitudinal axis of the installation box 1A, i.e the coupling systems 10A.1, 10A.2, 10A.3 are provided at the same distance from the bottom wall. In the shown embodiment said same distance is substantially zero, because a second surface 21 of the first flap 19 is substantially flush with a rear surface 47 of the bottom wall 6. Providing the coupling systems 10A.1, 10A.2, 10A.3 on the same plane allows the installation box to be coupled to another corresponding installation box in multiple orientations with the rear surface 47 of both installation boxes being flush with each other.

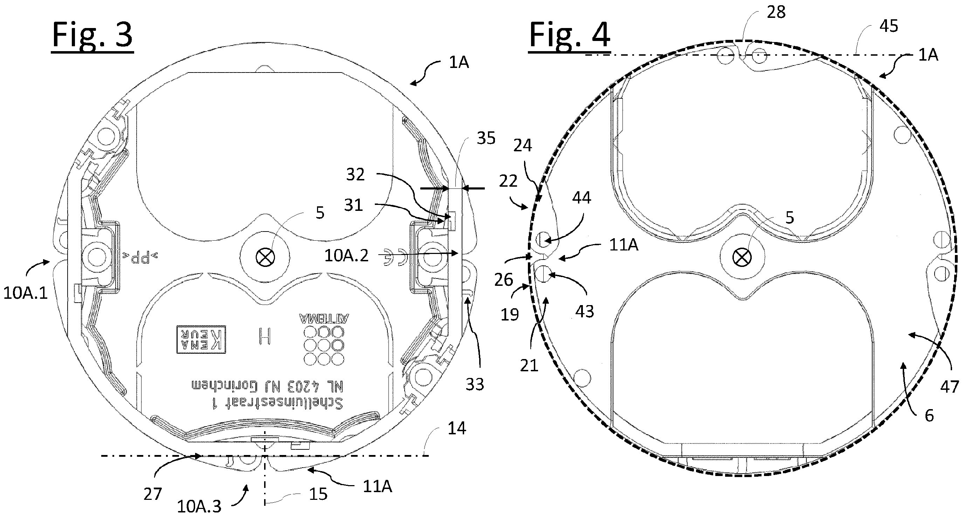

The first coupling system 10A.1 and the second coupling system 10A.2 are provided diametrically opposed relative to the each other, when seen relative to the longitudinal axis 5 in front view and/or in rear view of the installation box 1A, see for example figure 3.

The third coupling system 10A.3 is provided between the first coupling system 10A.1 and the second coupling system 10A.2, when seen in rear view of the installation box 1A. The first, second and third coupling system are provided at substantially 90 degree intervals around the installation box 1A, when seen relative to the longitudinal axis 5 in rear view of the installation box 1A. It may also be possible to provide the second coupling system at the 90 degree interval relative to the first coupling system. Also a fourth coupling system may be provided, such that the four coupling systems are each located at 90 degree intervals relative to two adjacent coupling systems.

The at least one coupling system 10A comprises a first coupling device 11A located at the bottom wall 6. The first coupling device 11A may be provided on the side wall, on the bottom wall, or partly on the side wall and partly on the bottom wall. The first coupling device 11A is configured to be coupled to a corresponding first coupling device 11B of the corresponding coupling system 10B of the other installation box 1B, as shown in figures 6 to 11.

The first coupling device 11A comprises a first flap 19 extending parallel to the bottom wall 6. The first flap 19 has a first surface 20 facing the free, second end 9 of the side wall 7, and an opposite, second surface 21.

The first coupling device 11A has a second flap 22 extending parallel to the bottom wall 6, the second flap 22 having a first surface 23 facing the free, second end 9 of the side wall 7, and an opposite, second surface 24. The second surface 23 of the second flap 22 is located at a distance 25 from the second surface 21 of the first flap 19 along the longitudinal axis 5.

The first surface 20 of the first flap 19 is substantially flush with the second surface 24 of the second flap 22.

In the shown embodiment the second surface 21 of the first flap 19 is substantially flush with a rear surface 47 of the bottom wall 6. This arrangement has as an advantage that the available inner space of the installation box is less affected. This also applies to the side wall, wherein having the second surface 21 of the first flap 19 flush with the rear surface 47 of the bottom wall takes up the least amount of space of the side wall 7. In other embodiments the second surface 21 of the first flap 19 may be located at a distance from the rear surface 47 of the bottom wall.

A first flap thickness of the first flap 19 is substantially equal to or less than half the thickness of the bottom wall 6. A second flap thickness of the second flap 22 is substantially equal to or less than half the thickness of the bottom wall 6. This makes the total thickness, or total height, of the first coupling device 11A substantially equal to or less than the bottom wall thickness 35. The first flap thickness, second flap thickness and total thickness are measured along the longitudinal axis.

Although greater flap thicknesses of the first flap 19 and second flap 22 are not excluded from the scope of the present invention, said total thickness being equal to or less than the bottom wall thickness, combined with having the second surface 21 of the first flap 19 substantially flush with the rear surface 47 of the bottom wall allows for the side wall to be used for other features, such as through holes for electrical wires. Also, the inner space of the installation box is less affected, and little material is used.

The first flap 19 is provided with a recess or with a through hole 43 in the first surface 20. The second flap 22 comprises a protrusion 44 provided on the second surface 24 thereof. The protrusion 44 and recess or through hole 31 are located on a line 45 parallel to the second rotation 18 axis and at an equal distance from the first rotation 17 axis. This way the protrusion 44 and recess or through hole 31 are symmetrically arranged so that the protrusion 44 will be inserted in a corresponding recess or through hole 31 of another installation box 1B when coupled therewith. The recess or through hole 31 then receives a corresponding protrusion 44 of the other installation box 1B when coupled therewith. When the two installation boxes 1A, 1B are coupled with each other, the respective protrusions 44 are both accommodated in a respective recess or through hole 31, which improves the coupling.

The protrusion 44 has a protrusion height that is equal to or smaller than the first flap 19 thickness. The protrusion height is measured along the longitudinal axis 5.

In rear view, figure 4, a gap 26 is provided between the first flap 19 and the second flap 22, the gap 26 being located at the first rotation axis 15.

The installation box 1A is substantially circular in rear view of the installation box 1A. The first coupling device 11A in rear view of the installation box 1A does not extend beyond the circular outer contour 28 of the installation box 1A.

The at least one coupling system 10A comprises a second coupling device 12A located on the side wall 7 at a distance 13 away from the bottom wall 6. The second coupling device 12A is in particular located on a part of the side wall 7 that is adjacent the first coupling device 11A, when viewed along the longitudinal axis 5. The second coupling device 12A is configured to be coupled to a corresponding second coupling device 12B of the corresponding coupling system 10B of the other installation box 1B, as shown in figures 6 to 11.

The second coupling is provided on a substantially flat outer surface 27 of the side wall 7, in particular on a part of the side wall 7 that is adjacent the first coupling device 11A along the longitudinal axis 5.

The first coupling device 11A defines a first rotational coupling axis 14 and a second rotational coupling axis 15. The first rotational coupling axis 14 extends substantially perpendicular to a side wall part 16 that is adjacent the first coupling device 11A along the longitudinal axis 5. The second rotational coupling axis 15 extends tangent and parallel to the side wall part 16 that is adjacent the first coupling device 11A along the longitudinal axis 5.

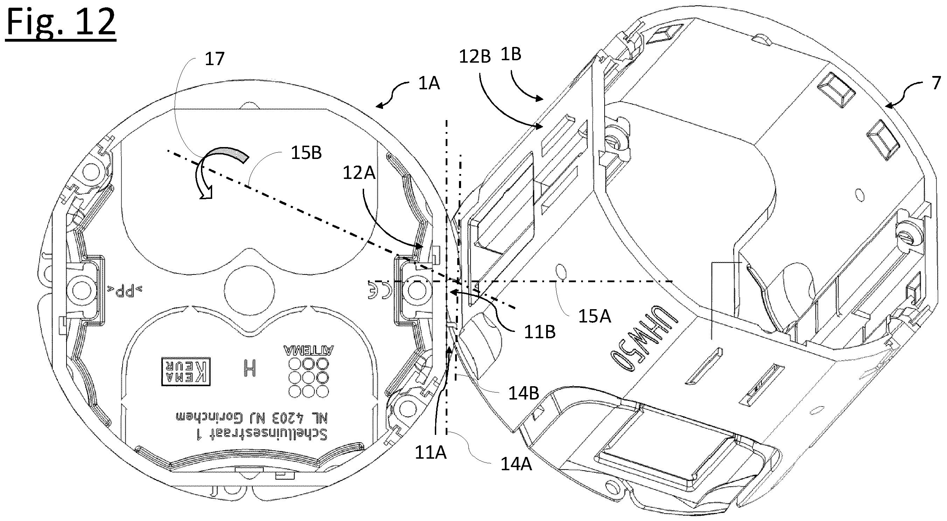

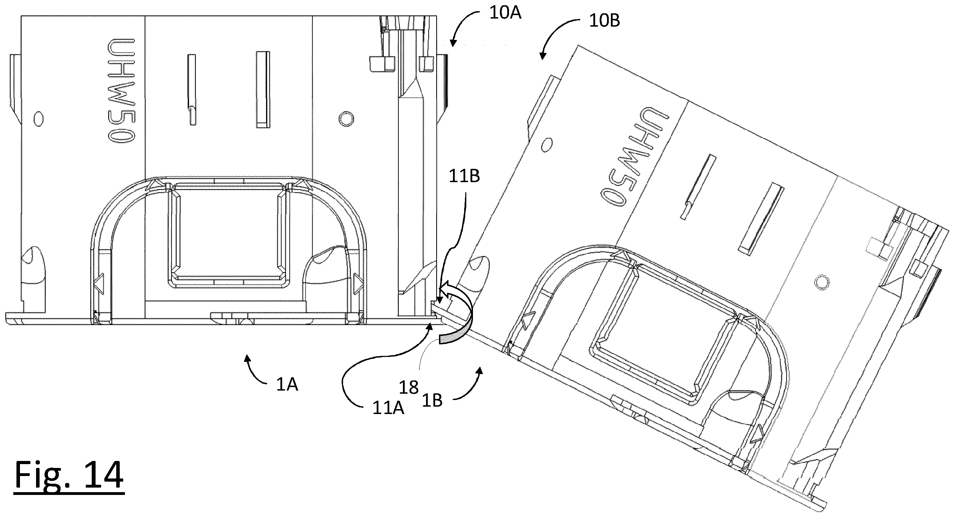

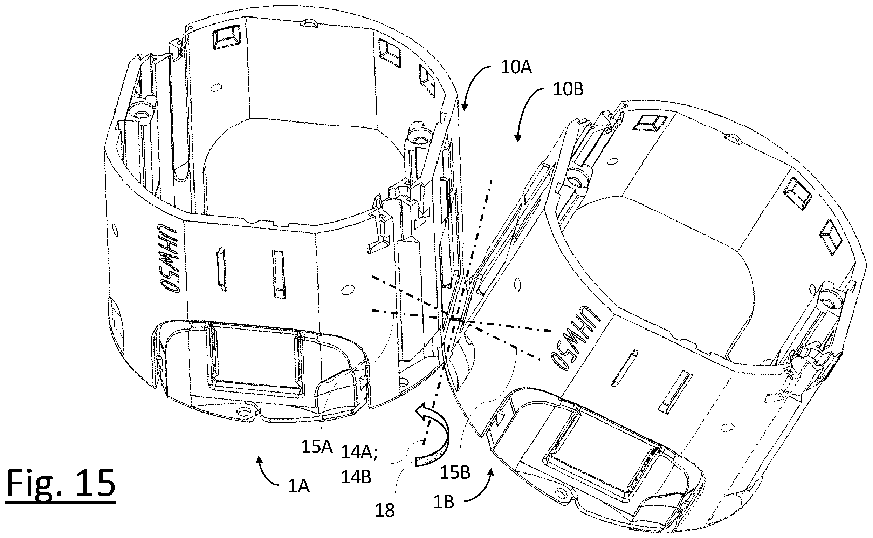

The coupling system 10A is configured to be coupled to said corresponding coupling system 10B by coupling the first coupling device 11A of the installation box 1A to the corresponding first coupling device 11B of the corresponding coupling system 10B of the other installation box 1B via a first rotation 17 about the first rotational coupling axis 14, and subsequently coupling the second coupling device 12A of the installation box 1A to the corresponding second coupling device 12B of the corresponding coupling system 10B of the other installation box 1B via a second rotation 18 about the second rotational coupling axis 15. The first rotation 17 is schematically shown from figures 12 and 13 to figures 14 and 15. The second rotation 18 is schematically shown from figures 14 and 15 to figure 9.

The second coupling device 12A comprises a recess or through hole 31 provided in the side wall 7. The recess or through hole 31 comprising a hook receiving member 32A.

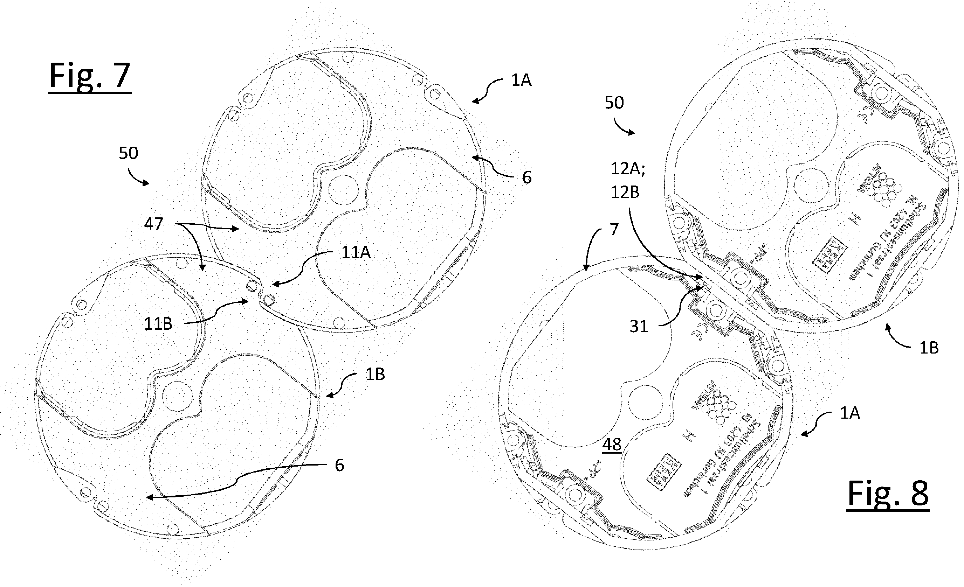

The second coupling device 12A further comprises a hook member 33 extending radially outwardly from the side wall 7. The hook member 33 hooks behind a hook receiving member 32B of a corresponding second coupling device 12B of the corresponding coupling system 10B of the other installation box 1B when coupled thereto, as can be seen in figures 8 to 11.

The hook member 33 comprises a first section 37 extending from the side wall 7 and having a free end 38, and a second section 39 extending transversely from the free end 38 of the first section 37 in a direction opposite to the first rotation 17. Said direction opposite to the first rotation 17 is beneficial in view of the pre-tension that may be provided by the first coupling device 11A. The pre-tension acts in the direction of the second section 39, thereby improving the hook force of the hook member 33.

The hook member 33 extends over a hook distance 34 away from the side wall 7. The hook distance 34 is at most equal to a wall thickness 35 of the side wall 7. This way the hook member 33 does not extend into the inner space 48 of the installation box 1A defined by the side wall 7. This is beneficial for the available inner space 48 of the installation box 1A when coupled to another installation box 1B.

The second coupling device 12A may comprise a sealing wall 36 that extends radially into the through hole. The sealing wall 36 abuts the hook member 33 when the installation box 1A is coupled to the other installation box 1B for sealing a coupling between the second coupling device 12A and the corresponding second coupling device 12B.

The second coupling device 12A in rear view of the installation box 1A does not extend beyond the outer contour 28 of the installation box 1A.

The side wall part 16 comprising the second coupling device 12A may be provided with sealing material 29, for example a thermoplastic elastomer. In figures 1, 5 and 6 the sealing material 29 is schematically shown. The sealing material 29 may be provided around a hole in the side wall part 16 or around a hole to be made 30 in the side wall part 16. Said hole or hole to be made is configured and intended to provide passage for electrical installation components. The hole to be made 30 may comprise a piece 49 that is to be pushed out of the side wall 7.

The bottom wall 6, the side wall 7 and the coupling system 10A are integrally manufactured via injection moulding. The installation box 1A may be made of a plastic.

Figures 6 to 11 schematically show an assembly 50 comprising a first installation box 1A and a second installation box 1B. The first installation box 1A may be the same as the one shown in figures 1 to 5. The second installation box 1B may also be the same as the one shown in figures 1 to 5. This way the corresponding coupling system 10B of the second installation box 1B is identical to the coupling system 10A of the first installation box 1A.

In the assembly 50 a first coupling system 10A of the first installation box 1A is coupled to a first coupling system 10B of the second installation box 1B. The first coupling device 11A of the first installation box 1A is coupled to a corresponding first coupling device 11B of the second installation box 1B. The second coupling device 12A of the first installation box 1A is coupled to a corresponding second coupling device 12B of the second installation box 1B.

The coupling between the first coupling devices 11A, 11B provides a torsional force 51 about the first rotational coupling axis 14 for pushing the hook member 33 of the first installation box 1A against the hook receiving member 32B of the second installation box 1B.

The assembly 50 may comprise additional installation boxes 1A, 1B according to the invention, wherein a coupling system 10A of for example a third installation box 1A is coupled to a coupling system 10A of the first installation box 1A or to a coupling system 10A of the second installation box 1B.

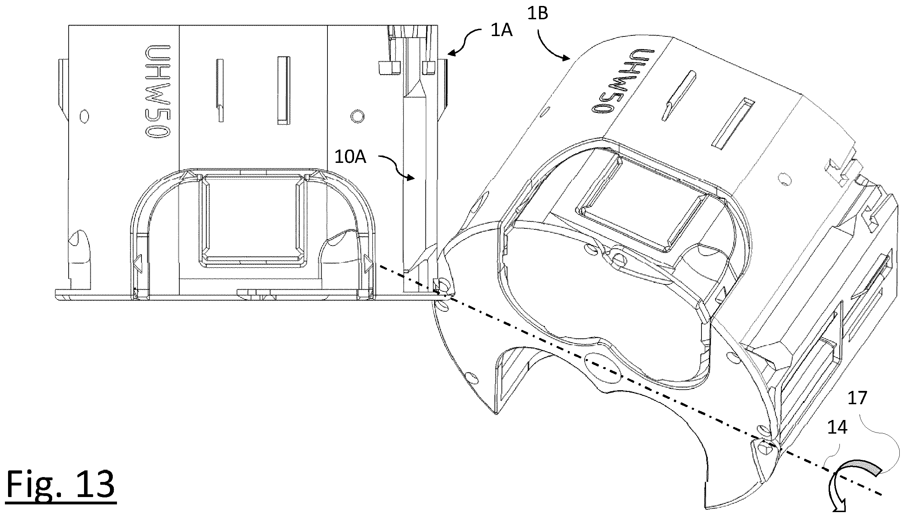

Figures 12 to 15 show different steps of a method of coupling a first installation box 1A according to the invention to a second installation box 1B according to the invention, thereby making an assembly 50 according to the invention. The method comprises
a. providing a first installation box 1A according to the invention and a second installation box 1B according to the invention,
b. engaging the first coupling device 11A of the first installation box 1A with the first coupling device 11A of the second installation box 1B such that the first rotational coupling axis 14 of the first installation box 1A intersects the first rotational coupling axis 14 of the second installation box 1B, see figures 12 and 13,
c. rotating the first installation box 1A and second installation box 1B relative to each other about their respective first rotational axes until the second rotational axis of the first installation box 1A substantially coincides with the second rotational axis of the second installation box 1B, see the movement of the two installation boxes 1A, 1B from figures 12 and 13 to figures 14 and 15,
d. pivoting the first installation box 1A and second installation box 1B relative to each other about their respective second rotational axes, thereby moving the side wall 7 adjacent the first coupling device 11A of the first installation box 1A towards the side wall 7 adjacent the first coupling device 11A of the second installation box 1B, see the movement of the two installation boxes 1A, 1B from figures 14 and 15 to figure 9,
e. coupling the second coupling device 12A of the first installation box 1A to the second coupling device 12B of the second installation box 1B. The result of step e is shown in figure 6.

Step e comprises inserting the hook member 33 of the second coupling device 12A of the first installation box 1A in the recess or through hole 31 of the second coupling device 12A of the second installation box 1B, and inserting the hook member 33 of the second coupling device 12B of the second installation box 1B in the recess or through hole 31 of the second coupling device 12A of the first installation box 1A.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

The present invention further relates to the following numbered clauses:
1. Installation box (1A) for an electrical installation for mounting in a hole of a wall, the installation box having a longitudinal axis (5), and comprising
   ∘ a bottom wall (6) extending transverse to the longitudinal axis,
   ∘ a side wall (7) extending substantially parallel to the longitudinal axis, the side wall having a first end (8) that is attached to the bottom wall, and a free, second end (9),
   ∘ at least one coupling system (10A) for coupling the installation box to a corresponding coupling system (10B) of another installation box (1B), the at least one coupling system comprising
      ▪ a first coupling device (11A) located at the bottom wall, the first coupling device being configured to be coupled to a corresponding first coupling device (11B) of the corresponding coupling system of the other installation box, and
      ▪ a second coupling device (12A) located on the side wall at a distance (13) away from the bottom wall, the second coupling device being configured to be coupled to a corresponding second coupling device (12B) of the corresponding coupling system of the other installation box,
         wherein the first coupling device defines a first rotational coupling axis (14) and a second rotational coupling axis (15), wherein the first rotational coupling axis extends substantially perpendicular to a side wall part (16) that is adjacent the first coupling device along the longitudinal axis, and wherein the second rotational coupling axis extends tangent and parallel to the side wall part that is adjacent the first coupling device along the longitudinal axis, wherein the coupling system is configured to be coupled to said corresponding coupling system by coupling the first coupling device of the installation box to the corresponding first coupling device of the corresponding coupling system of the other installation box via a first rotation (17) about the first rotational coupling axis, and subsequently coupling the second coupling device of the installation box to the corresponding second coupling device of the corresponding coupling system of the other installation box via a second rotation (18) about the second rotational coupling axis.
2. Installation box according to claim 1, wherein the first coupling device comprises
   ∘ a first flap (19) extending parallel to the bottom wall, the first flap having a first surface (20) facing the free, second end of the side wall, and an opposite, second surface (21),
   ∘ a second flap (22) extending parallel to the bottom wall, the second flap having a first surface (23) facing the free, second end of the side wall, and an opposite, second surface (24),
   wherein the second surface of the second flap is located at a distance from the second surface of the first flap along the longitudinal axis.
3. Installation box according to clause 2, wherein the first surface of the first flap is substantially flush with the second surface of the second flap.
4. Installation box according to clause 2 or 3, wherein in rear view a gap (26) is provided between the first flap and the second flap, the gap being located at the first rotation axis.
5. Installation box according to any one of the preceding clauses, wherein the second coupling is provided on a substantially flat outer surface (27) of the side wall.
6. Installation box according to any one of the preceding clauses, wherein the installation box is substantially circular in rear view of the installation box, and wherein the first coupling device in rear view of the installation box does not extend beyond the outer contour (28) of the installation box.
7. Installation box according to any one of the preceding clauses, wherein the installation box is circular in rear view of the installation box, and wherein the second coupling device in rear view of the installation box does not extend beyond the outer contour of the installation box.
8. Installation box according to any one of the preceding clauses, wherein the side wall part comprising the second coupling device is provided with sealing material (29), in particular around a hole in the side wall part or around a hole to be made (30) in the side wall part, the hole being configured to provide passage for electrical installation components.
9. Installation box according to any one of the preceding clauses, wherein the second coupling device comprises
   ∘ a recess or through hole (31) provided in the side wall, the recess or through hole comprising a hook receiving member (32A),
   ∘ a hook member (33) extending radially outwardly from the side wall, the hook member being configured to hook behind a hook receiving member (32B) of a corresponding second coupling device (12B) of the corresponding coupling system of the other installation box when coupled thereto.
10. Installation box according to the preceding clause, wherein the hook member extends over a hook distance away from the side wall, wherein the hook distance is at most equal to a wall thickness (35) of the side wall.
11. Installation box according to any one of the preceding clauses 9-10, wherein the second coupling device comprises a sealing wall (36) that extends radially into the through hole, the sealing wall being configured to abut the hook member when the installation box is coupled to the other installation box for sealing a coupling between the second coupling device and the corresponding second coupling device.
12. Installation box according to any one of the preceding clauses 9-11, wherein the hook member comprises a first section (37) extending from the side wall and having a free end (38), and a second section (39) extending transversely from the free end of the first section in a direction opposite to the first rotation.
13. Installation box according to any one of the preceding clauses, comprising a first coupling system (10A) and a second coupling system (10A) provided diametrically opposed relative to the first coupling system, when seen relative to the longitudinal axis in rear view of the installation box.
14. Installation box according to the preceding clause, comprising a first and a second coupling system, and a third coupling system (10A) provided between the first coupling system and the second coupling system, when seen in rear view of the installation box.
15. Installation box according to any one of the preceding clauses 2-14, wherein a first flap thickness of the first flap is substantially equal to or less than half the thickness of the bottom wall, and wherein a second flap thickness of the second flap is substantially equal to or less than half the thickness of the bottom wall.
16. Installation box according to any one of the preceding clauses 2-15, wherein the first flap is provided with a recess or with a through hole (43) in the first surface, and wherein the second flap comprises a protrusion (44) provided on the second surface thereof, wherein the protrusion and recess or through hole are located on a line (45) parallel to the second rotation axis and at an equal distance from the first rotation axis.
17. Installation box according to the preceding clause, wherein the protrusion has a protrusion height that is equal to or smaller than the first flap thickness.
18. Installation box according to any one of the preceding clauses 2-17, wherein the second surface of the first flap is substantially flush with a rear surface (47) of the bottom wall.
19. Installation box according to any one of the preceding clauses, wherein the bottom wall, the side wall and the coupling system are integrally manufactured via injection moulding.
20. Assembly (50) comprising a first installation box (1A) according to any one of the preceding clauses and a second installation box (1B) according to any one of the preceding clauses, wherein a first coupling system of the first installation box is coupled to a first coupling system of the second installation box, wherein the first coupling device of the first installation box is coupled to a corresponding first coupling device of the second installation box, and wherein a second coupling device of the first installation box is coupled to a corresponding second coupling device of the second installation box.
21. Assembly according to the preceding clause, wherein the second coupling device comprises
   ∘ a recess or through hole provided in the side wall, the recess or through hole comprising a hook receiving member,
   ∘ a hook member extending radially outwardly from the side wall, the hook member being hooked behind a hook receiving member of a corresponding second coupling device of the corresponding coupling system of the other installation box when coupled thereto,
   wherein the coupling between the first coupling devices provides a torsional force about the first rotational coupling axis for pushing the hook member of the first installation box against the hook receiving member of the second installation box.
22. Assembly according to clause 20 or 21, wherein the assembly comprises a third installation box according to any one of the preceding clauses 13-19, wherein a first coupling system of the third installation box is coupled to a second coupling system of the first installation box or to a second coupling system of the second installation box.
23. Method of coupling a first installation box according to any one of clauses 1-19 to a second installation box according to any one of clauses 1-19, the method comprising
   a. providing a first installation box according to any one of clauses 1-19 and a second installation box according to any one of clauses 1-19,
   b. engaging the first coupling device of the first installation box with the first coupling device of the second installation box such that the first rotational coupling axis of the first installation box intersects the first rotational coupling axis of the second installation box,
   c. rotating the first installation box and second installation box relative to each other about their respective first rotational axes until the second rotational axis of the first installation box substantially coincides with the second rotational axis of the second installation box,
   d. pivoting the first installation box and second installation box relative to each other about their respective second rotational axes, thereby moving the side wall adjacent the first coupling device of the first installation box towards the side wall adjacent the first coupling device of the second installation box,
   e. coupling the second coupling device of the first installation box to the second coupling device of the second installation box.
24. Method according to the preceding clause, wherein the second coupling device comprises
   ∘ a recess or through hole provided in the side wall, the recess or through hole comprising a hook receiving member,
   ∘ a hook member extending radially outwardly from the side wall, the hook member being configured to hook behind a hook receiving member of a corresponding second coupling device of the corresponding coupling system of the other installation box when coupled thereto
   wherein step e comprises inserting the hook member of the second coupling device of the first installation box in the recess or through hole of the second coupling device of the second installation box, and inserting the hook member of the second coupling device of the second installation box in the recess or through hole of the second coupling device of the first installation box.

## Claims

1. Installation box (1A) for an electrical installation for mounting in a hole of a wall, the installation box having a longitudinal axis (5), and comprising
∘ a bottom wall (6) extending transverse to the longitudinal axis,
∘ a side wall (7) extending substantially parallel to the longitudinal axis, the side wall having a first end (8) that is attached to the bottom wall, and a free, second end (9),
∘ at least one coupling system (10A) for coupling the installation box to a corresponding coupling system (10B) of another installation box (1B), the at least one coupling system comprising
▪ a first coupling device (11A) located at the bottom wall, the first coupling device being configured to be coupled to a corresponding first coupling device (11B) of the corresponding coupling system of the other installation box, and
▪ a second coupling device (12A) located on the side wall at a distance (13) away from the bottom wall, the second coupling device being configured to be coupled to a corresponding second coupling device (12B) of the corresponding coupling system of the other installation box,
wherein the first coupling device defines a first rotational coupling axis (14) and a second rotational coupling axis (15), wherein the first rotational coupling axis extends substantially perpendicular to a side wall part (16) that is adjacent the first coupling device along the longitudinal axis, and wherein the second rotational coupling axis extends tangent and parallel to the side wall part that is adjacent the first coupling device along the longitudinal axis, wherein the coupling system is configured to be coupled to said corresponding coupling system by coupling the first coupling device of the installation box to the corresponding first coupling device of the corresponding coupling system of the other installation box via a first rotation (17) about the first rotational coupling axis, and subsequently coupling the second coupling device of the installation box to the corresponding second coupling device of the corresponding coupling system of the other installation box via a second rotation (18) about the second rotational coupling axis.

2. Installation box according to claim 1, wherein the first coupling device comprises
∘ a first flap (19) extending parallel to the bottom wall, the first flap having a first surface (20) facing the free, second end of the side wall, and an opposite, second surface (21),
∘ a second flap (22) extending parallel to the bottom wall, the second flap having a first surface (23) facing the free, second end of the side wall, and an opposite, second surface (24),
wherein the second surface of the second flap is located at a distance from the second surface of the first flap along the longitudinal axis.

3. Installation box according to claim 2, wherein the first surface of the first flap is substantially flush with the second surface of the second flap.

4. Installation box according to claim 2 or 3, wherein in rear view a gap (26) is provided between the first flap and the second flap, the gap being located at the first rotation axis.

5. Installation box according to any one of the preceding claims, wherein the second coupling is provided on a substantially flat outer surface (27) of the side wall.

6. Installation box according to any one of the preceding claims, wherein the installation box is substantially circular in rear view of the installation box, and wherein the first coupling device in rear view of the installation box does not extend beyond the outer contour (28) of the installation box.

7. Installation box according to any one of the preceding claims, wherein the installation box is circular in rear view of the installation box, and wherein the second coupling device in rear view of the installation box does not extend beyond the outer contour of the installation box.

8. Installation box according to any one of the preceding claims, wherein the side wall part comprising the second coupling device is provided with sealing material (29), in particular around a hole in the side wall part or around a hole to be made (30) in the side wall part, the hole being configured to provide passage for electrical installation components.

9. Installation box according to any one of the preceding claims, wherein the second coupling device comprises
∘ a recess or through hole (31) provided in the side wall, the recess or through hole comprising a hook receiving member (32A),
∘ a hook member (33) extending radially outwardly from the side wall, the hook member being configured to hook behind a hook receiving member (32B) of a corresponding second coupling device (12B) of the corresponding coupling system of the other installation box when coupled thereto.

10. Installation box according to any one of the preceding claims, comprising a first coupling system (10A) and a second coupling system (10A) provided diametrically opposed relative to the first coupling system, when seen relative to the longitudinal axis in rear view of the installation box.

11. Installation box according to any one of the preceding claims 2-10, wherein a first flap thickness of the first flap is substantially equal to or less than half the thickness of the bottom wall, and wherein a second flap thickness of the second flap is substantially equal to or less than half the thickness of the bottom wall.

12. Installation box according to any one of the preceding claims 2-11, wherein the first flap is provided with a recess or with a through hole (43) in the first surface, and wherein the second flap comprises a protrusion (44) provided on the second surface thereof, wherein the protrusion and recess or through hole are located on a line (45) parallel to the second rotation axis and at an equal distance from the first rotation axis.

13. Assembly (50) comprising a first installation box (1A) according to any one of the preceding claims and a second installation box (1B) according to any one of the preceding claims, wherein a first coupling system of the first installation box is coupled to a first coupling system of the second installation box, wherein the first coupling device of the first installation box is coupled to a corresponding first coupling device of the second installation box, and wherein a second coupling device of the first installation box is coupled to a corresponding second coupling device of the second installation box.

14. Assembly according to the preceding claim, wherein the second coupling device comprises
∘ a recess or through hole provided in the side wall, the recess or through hole comprising a hook receiving member,
∘ a hook member extending radially outwardly from the side wall, the hook member being hooked behind a hook receiving member of a corresponding second coupling device of the corresponding coupling system of the other installation box when coupled thereto,
wherein the coupling between the first coupling devices provides a torsional force about the first rotational coupling axis for pushing the hook member of the first installation box against the hook receiving member of the second installation box.

15. Method of coupling a first installation box according to any one of claims 1-12 to a second installation box according to any one of claims 1-12, the method comprising
a. providing a first installation box according to any one of claims 1-12 and a second installation box according to any one of claims 1-12,
b. engaging the first coupling device of the first installation box with the first coupling device of the second installation box such that the first rotational coupling axis of the first installation box intersects the first rotational coupling axis of the second installation box,
c. rotating the first installation box and second installation box relative to each other about their respective first rotational axes until the second rotational axis of the first installation box substantially coincides with the second rotational axis of the second installation box,
d. pivoting the first installation box and second installation box relative to each other about their respective second rotational axes, thereby moving the side wall adjacent the first coupling device of the first installation box towards the side wall adjacent the first coupling device of the second installation box,
e. coupling the second coupling device of the first installation box to the second coupling device of the second installation box.
